Europäisches Patentamt

(19) European Patent Office

Office européen des brevets

(11) Numéro de publication: **0 227 538**
**B1**

(12) **FASCICULE DE BREVET EUROPEEN**

(51) Int. Cl.⁴: **F16D 66/02, H01B 17/58**

(45) Date de publication du fascicule du brevet:
12.07.89

(21) Numéro de dépôt: **86402754.5**

(22) Date de dépôt: **10.12.86**

(54) Procédé pour fixer à une plaque de support un conducteur électrique et application du procédé à la réalisation de dispositifs de détection d'usure de garnitures de friction.

(30) Priorité: **10.12.85 FR 8518241**

(43) Date de publication de la demande:
**01.07.87 Bulletin 87/27**

(45) Mention de la délivrance du brevet:
**12.07.89 Bulletin 89/28**

(84) Etats contractants désignés:
**DE ES GB IT NL**

(56) Documents cités:
**DE-A- 2 416 939**
**DE-A- 3 209 009**
**FR-A- 2 183 379**
**FR-A- 2 485 133**
**GB-A- 789 471**

(73) Titulaire: **COMPAGNIE PLASTIC OMNIUM Société Anonyme dite:, 19, avenue Jules Carteret, F-69007 Lyon(FR)**

(72) Inventeur: **Moret de Rocheprise, Bernard, 4 rue Chateau du Mont, F-52600 Chalindrey(FR)**
Inventeur: **Bartocci, Marcel, F-52200 Balesmes(FR)**

(74) Mandataire: **Leszczynski, André et al, CABINET NONY & CIE. 29 rue Cambacérès, F-75008 Paris(FR)**

ACTORUM AG

## Description

La présente invention est relative à un procédé pour fixer à une plaque de support un conducteur électrique, notamment un fil souple comportant une âme conductrice revêtue d'une gaine isolante, ledit conducteur traversant au moins partiellement ladite plaque.

Dans de nombreuses applications, on est amené à faire passer un fil électrique gainé au travers d'un support avec interposition d'un isolant entre le fil électrique et le support, de préférence un manchon isolant, par exemple en résine fluorée, telle que le PTFE, entourant ledit conducteur au moins dans sa zone de traversée de la plaque de support.

Ainsi, à titre nullement limitatif, on peut citer les montages passe-fil dans des installations électriques ou électroniques ou encore des dispositifs détecteurs d'usure de garnitures de friction, notamment de plaquettes de freins à disque de véhicules automobiles.

La présente invention se rapporte à de tels dispositifs détecteurs d'usure.

Un dispositif détecteur d'usure est par exemple décrit dans le brevet français 2 183 379.

Le dispositif comprend un fil électrique gainé dont l'extrémité est entourée par un manchon fermé réalisé en matière isolante et fixé par encliquetage à une plaque de support.

La plaque de support est disposée sur la garniture de friction de telle manière que lorsque le degré admissible d'usure de la garniture est atteint, l'extrémité du conducteur électrique vient en contact avec une surface de friction telle qu'un disque de frein permettant, grâce au contact réalisé après mise à nu de l'extrémité du fil, le déclenchement d'un signal avertisseur.

Dans des dispositifs de ce type, le manchon isolant est fixé par collage ou surmoulage sur la gaine du fil électrique conducteur.

Ce mode de montage est, dans la pratique, d'un coût élevé compte tenu des difficultés d'automatiser économiquement les opérations de surmoulage ou de collage.

La présente invention se propose de fournir un procédé simple et économique à mettre en œuvre, facile à automatiser et évitant notamment les opérations de surmoulage et de collage de l'art antérieur.

Le procédé selon l'invention pour la réalisation de dispositifs de détection d'usure de garnitures de friction, notamment de plaquettes de garniture de freins, en particulier de freins à disque se caractérise essentiellement par le fait que l'isolant entourant le conducteur électrique, traverse librement la plaque de support, la solidarisation par sertissage de l'isolant et du conducteur électrique étant effectuée par déformation radiale et/ou axiale de la plaque de support.

Dans une forme préférée de réalisation, l'isolant est conformé en manchon comportant le cas échéant une collerette de retenue sur la plaque de support, et présente une paroi de fond, un fil dénudé à son extrémité étant introduit dans le manchon et immobilisé par sertissage comme indiqué ci-dessus.

En variante, l'isolant est constitué par la gaine isolante du conducteur électrique.

Dans le but de mieux faire comprendre l'invention, on va maintenant décrire, à titre nullement limitatif, plusieurs exemples de mise en œuvre en se référant au dessin annexé dans lequel:

La figure 1 illustre la mise en œuvre de l'invention pour le montage d'un dispositif de détection d'usure de plaquettes de freins,

La figure 2 illustre un second mode de mise en œuvre de l'invention.

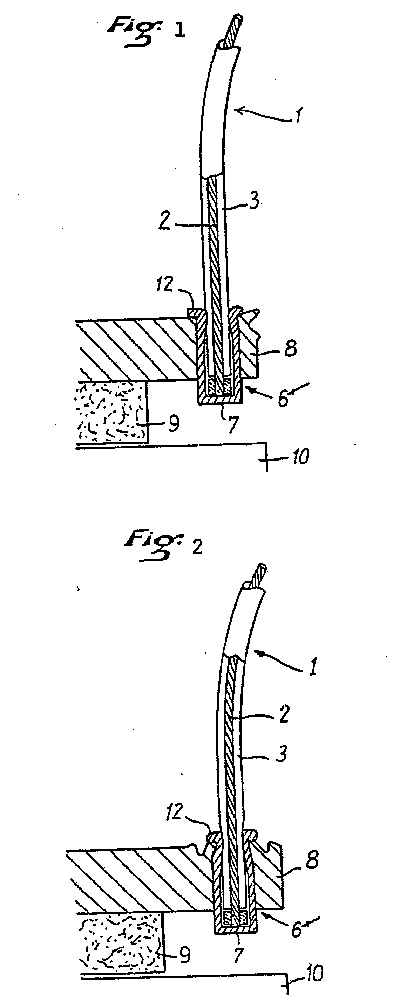

En se référant aux figures 1 et 2, on voit un conducteur électrique sous forme de fil souple 1 comportant une âme conductrice 1 et une gaine isolante 3.

L'extrémité dénudée 4 de l'âme 2 est, après mise en place d'un embout d'extrémité 5, logée dans un manchon isolant 6, de préférence en une résine fluorée telle que le PTFE, le manchon comportant une paroi de fond 7.

Le manchon 6 est engagé dans un orifice correspondant d'une plaque de support 8.

A l'extrémité libre opposée du conducteur électrique 1 est fixée une cosse (non représentée) permettant la liaison avec un circuit électrique également non représenté.

La plaque 8 supporte également une garniture de friction 9 en regard d'une surface de friction 10, par exemple un disque de frein.

Le fonctionnement du dispositif est déjà décrit dans le brevet français 2 183 379 auquel on pourra se référer pour plus de détails.

Comme mentionné, le manchon isolant 6 est enfoncé librement dans un orifice prévu à cet effet et comporte simplement une collerette supérieure de retenue 12.

La solidarisation par sertissage du manchon 6 et du conducteur électrique 1 s'effectue dans la zone de la plaque de support 8 par déformation de la plaque elle-même, à l'aide d'un outil approprié (non représenté), la déformation s'effectuant soit en sens radial (figure 1), soit en sens axial (figure 2). Le manchon 6 et le conducteur électrique (1) sont ainsi solidarisés entre eux et à la plaque de support 8 par suite du sertissage.

On comprend que dans tous les modes de réalisation représentés, aucune opération de collage ou de surmoulage du manchon sur le conducteur électrique n'est nécessaire, les opérations de sertissage pouvant être facilement automatisées permettant ainsi une réduction notable du prix de revient.

Dans une variante, non représentée, on peut supprimer le manchon 6 et déformer la plaque 8 sur la gaine isolante 3 du fil conducteur, l'extrémité de la gaine étant alors avantageusement obturée, notamment par soudure.

## Revendications

1. Procédé pour fixer à une plaque de support (8) un conducteur électrique (1), notamment un fil souple, ledit conducteur traversant au moins partiellement ladite plaque et un isolant (3, 6) entourant ledit conducteur (1) au moins dans sa zone de traversée de la plaque de support (8) dans un dispositif de détection d'usure de garnitures de friction, notamment de plaquettes de garnitures de freins, en particulier de freins à disques, caractérisé par le fait que l'isolant (3, 6) entourant le conducteur électrique (1) traverse librement la plaque de support (8), et que l'on effectue la solidarisation de l'isolant (3, 6) et du conducteur électrique (1) par sertissage par déformation radiale et/ou axiale de la plaque de support (8).

2. Procédé selon la revendication 1, caractérisé par le fait que l'isolant est conformé en manchon (6) présentant une paroi de fond (7), le conducteur électrique (1), sous forme de fil dénudé à son extrémité étant introduit dans le manchon et immobilisé par sertissage.

3. Procédé selon la revendication 2, caractérisé par le fait que le manchon (6) comporte une collerette de retenue (12).

4. Procédé selon la revendication 1, caractérisé par le fait que l'isolant est la gaine (3) du conducteur électrique.

5. Procédé selon l'une quelconque des revendications 1 à 4, caractérisé par le fait que l'isolant est une résine fluorée, notamment du PTFE.

**Patentansprüche**

1. Verfahren zur Befestigung eines elektrischen Leiters (1), insbesondere einer Leitungsschnur, an eine Tragplatte (8), wobei der genannte Leiter die genannte Platte zumindest teilweise durchtritt und ein Isolierstoff (3, 6) den genannten Leiter (1) zumindest in seinem Durchtrittsbereich durch die Tragplatte (8) in einer Verschleissermittlungsvorrichtung für Reibbeläge, vor allem Bremsbeläge, insbesondere für Schreibenbremsen, umgibt, dadurch gekennzeichnet, dass der den elektrischen Leiter (1) umgebende Isolierstoff (3, 6) die Tragplatte (8) frei durchtritt, und dass die feste Verbindung des Isolierstoffes (3, 6) mit dem elektrischen Leiter (1) durch Quetschverbindung mit radialer und/oder axialer Verformung der Tragplatte (8) hergestellt wird.

2. Verfahren nach Anspruch 1, dadurch gekennzeichnet, dass der Isolierstoff als eine Bodenwand (7) aufweisende Muffe (6) ausgebildet ist, wobei der elektrische Leiter (1) in Form eines an seinem Ende abisolierten Drahtes in die Muffe eingeführt und durch Quetschverbindung festgelegt wird.

3. Verfahren nach Anspruch 2, dadurch gekennzeichnet, dass die Muffe (6) einen Halteflansch (12) umfasst.

4. Verfahren nach Anspruch 1, dadurch gekennzeichnet, dass der Isolierstoff die Ummantelung (3) des elektrischen Leiters ist.

5. Verfahren nach einem der vorstehenden Ansprüche 1 bis 4, dadurch gekennzeichnet, dass der Isolierstoff ein Fluorkunststoff, insbesondere PTFE, ist.

**Claims**

1. A method for fixing to a support plate (8) an electric conductor (1), notably a flexible wire, said conductor extending at least partly through said plate and an insulation (3, 6) surrounding said conductor (1), at least in its zone extending across the support plate (8) in a friction lining wear detection device, notably of brake linings, particularly of disk brakes, characterized by the fact that the insulation (3, 6) surrounding the electric conductor (1) extends freely right through the support plate (8), and the insulation (3, 6) and electric conductor (1) are rigidly joined by a radial and/or axial deformation crimping of the support plate (8).

2. A method according to claim 1, characterized by the fact that the insulation is formed in the shape of a sleeve (6) having a bottom wall (7), the electric conductor (1), in the shape of a wire bared at its end, being introduced in the sleeve and secured against motion by crimping.

3. A method according to claim 2, characterized by the fact that sleeve (6) is formed with a retaining flange (12).

4. A method according to claim 1, characterized by the fact that the insulation is the electric conductor sleeve (3).

5. A method according to any one of claims 1 to 4, characterized by the fact that the insulation is a fluorocarbon resin, notably PTFE.

Fig. 1

Fig. 2